(19) Europäisches Patentamt
European Patent Office
Office européen des brevets

(11) Numéro de publication: **0 103 330**
**B1**

# (12) FASCICULE DE BREVET EUROPÉEN

(45) Date de publication du fascicule du brevet: **25.01.89**

(51) Int. Cl.⁴: **A 01 N 25/04**, A 01 N 63/00, A 01 N 63/04

(21) Numéro de dépôt: **83201238.9**

(22) Date de dépôt: **30.08.83**

(54) **Compositions concentrées contenant des produits pesticides biosynthétiques et procédés pour leur production et leur utilisation.**

(30) Priorité: **10.09.82 FR 8215473**

(43) Date de publication de la demande: **21.03.84 Bulletin 84/12**

(45) Mention de la délivrance du brevet: **25.01.89 Bulletin 89/4**

(84) Etats contractants désignés: **AT BE CH DE FR GB IT LI NL SE**

(56) Documents cité:
**FR-A-1 583 649**
**FR-A-2 160 549**
**US-A-3 271 243**
**US-A-4 000 258**

**JOURNAL OF ECONOMIC ENTOMOLOGY, vol. 68, 1975, College Park, MARYLAND (US) B. MAKSYMIUK et al.: "Physical properties of bacillus thuringiensis spray formulations", pages 407-410**
**Remington's Pharmaceutical Sciences (1975), pages 95 and 324**

(73) Titulaire: **SOLVAY & Cie (Société Anonyme), Rue du Prince Albert, 33, B-1050 Bruxelles (BE)**

(72) Inventeur: **Gago, Ignace, Chaussée de Nivelles, 53, B-1420 Braine- l'Alleud (BE)**
Inventeur: **Coppens, Guillaume, Avenue Louis Jasmin, 89, B-1150 Bruxelles (BE)**

EP 0 103 330 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1989

## Description

La présente invention concerne des compositions concentrées contenant des produits pesticides biosynthétiques ainsi que des procédés pour leur production et leur utilisation.

Les produits pesticides biosynthétiques présentent de nombreux avantages par rapport aux pesticides chimiques, notamment du fait de leur grande spécificité. Ainsi, les pesticides biosynthétiques toxiques ou pathogènes pour des insectes sont en général non toxiques et non pathogènes pour l'homme et les autres êtres vivants. En outre, vu leur spécificité, ils ne mettent en général pas en danger les prédateurs et parasites naturels des insectes que l'on désire éliminer, ni les insectes bénéfiques. Ils ne sont pas phytotoxiques et ne laissent aucun résidu toxique. Enfin, les insectes ne paraissent pas développer une résistance à ce type de pesticides, contrairement à ce qui se passe lors de l'utilisation d'insecticides organiques de synthèse.

Les pesticides biosynthétiques peuvent être obtenus à partir de microorganismes très divers. Une classe de pesticides biosynthétiques des plus couramment utilisés dans la lutte contre certains insectes est obtenue à partir de Bacillus thuringiensis dont on connaît de nombreuses variétés.

Les pesticides biosynthétiques n'étant en général pas solubles, ils nécessitent la mise en oeuvre de techniques particulières pour leur application. Ils peuvent se présenter sous forme de particules solides sèches ou sous forme de suspensions de particules solides dans un liquide adéquat. En général, ils sont mis en oeuvre sous forme de suspensions que l'on pulvérise sur les zones infestées selon diverses techniques connues en elles-mêmes. Une technique fréquemment utilisée pour traiter de grandes surfaces telles que des forêts ou des grandes étendues de terres cultivées ou encore de grandes étendues d'eau, de marécages ou de rivières consiste à pulvériser par voie aérienne des suspensions de pesticides biosynthétiques.

On a proposé, dans le brevet US-A-3 271 243 (INTERNATIONAL MINERALS & CHEMICAL CORP) de préparer des concentrés de pesticides biosynthétiques en mélangeant le brouet provenant de la fermentation du Bacillus thuringiensis avec un hydrocarbure liquide contenant un agent émulsionnant et de traiter les zones infestées en pulvérisant, par voie aérienne, le produit obtenu après dilution à l'eau de ce concentré. Le concentré étant visqueux, l'opération de dilution est indispensable pour que le produit puisse être mis en oeuvre correctement. Les suspensions pulvérisées ont de ce fait une concentration en particules solides, et donc en matières actives, assez faible. Dès lors, les étendues que l'on peut traiter par voie aérienne, en un seul vol, sont réduites. En outre, il est fréquent que les suspensions concentrées décantent au cours du stockage.

On a également proposé, dans le brevet US-A-4 000 258 (SANDOZ Inc.), de mettre en suspension des particules de Bacillus thuringiensis solides dans un alcool monohydrique contenant de 7 à 12 atomes de carbone ou dans un polyalkylèneglycol tel que le polyéthylèneglycol, le polypropylèneglycol ou le polyéthylène-propylène-glycol. Dans ce cas, les suspensions ont une viscosité très élevée et sont difficiles à préparer et à manipuler de sorte qu'il y a lieu également de les diluer avant de pouvoir les pulvériser ce qui conduit aux mêmes inconvénients que la technique précédente. En outre, lorsqu'on essaie de diluer ces suspensions dans le gasoil, on observe des phénomènes de flocculation qui rendent le produit difficile à pulvériser.

La présente invention vise à procurer des compositions concentrées contenant des produits pesticides biosynthétiques ne présentant pas les inconvénients des compositions connues. Elle vise à procurer des suspensions de produits pesticides biosynthétiques qui sont stables, n'ont pas tendance à décanter, ne perdent pas leur activité au cours du stockage, qui sont fluides et ont une viscosité suffisamment faible pour pouvoir être aisément pulvérisées, qui ont une concentration en matières actives élevée de manière à ce que le volume à transporter pour une dose de matière active donnée soit faible, qui sont faciles à disperser, diluer ou émulsionner dans des diluants tels que le gasoil et l'eau, si une dilution s'avère indispensable, sans que l'on observe des phénomènes de flocculation ou de décantation et sans que l'on doive avoir recours à une agitation particulière, et enfin qui collent bien sur les végétaux de manière à leur permettre d'exercer toute leur activité. Les compositions contenant des produits pesticides biosynthétiques en suspension selon l'invention conviennent particulièrement bien aux applications par voie aérienne et elles peuvent être utilisées telles quelles sans dispersion préalable dans le gasoil.

L'invention concerne des compositions concentrées contenant des produits pesticides biosynthétiques provenant de microorganismes des types Bacillus, sous forme de particules solides en suspension dans un liquide dont la masse spécifique est voisine de ou légèrement supérieure à la masse spécifique des particules solides, ces compositions concentrées contiennent de 50 à 600 g par litre de particules solides et de 400 à 1600 g par litre de liquide et ont une viscosité de 0,5 à $200.10^{-3}$ Pa.s.

Par liquide dont la masse spécifique est voisine de ou légèrement supérieure à la masse spécifique des particules solides, on entend désigner les liquides dont la masse spécifique est comprise entre 88 % et 115 %, souvent entre 94 et 109 %, et de préférence entre 97 et 105 %, de la masse spécifique moyenne réelle des particules solides. Les meilleurs résultats sont obtenus lorsque le liquide a une masse spécifique très légèrement supérieure à celle des

particules solides, en général égale à 100 à 101 % de celle des particules solides.

Le liquide présent dans les compositions concentrées de l'invention est liquide à la température ambiante, c'est-à-dire à la temperature du milieu dans lequel les compositions concentrées de l'invention sont mises en oeuvre comme pesticide.

La masse spécifique moyenne réelle des particules solides peut être déterminée par toute méthode appropriée. Ainsi, on peut mettre en suspension une quantité pondérale prédéterminée des particules solides dans un volume prédéterminé d'un liquide de masse spécifique connue et mesurer la masse spécifique du mélange. D'autres méthodes peuvent également convenir.

Les compositions concentrées selon l'invention sont fluides et ont, en général, une viscosité (mesurée à l'aide d'un viscosimètre Brookfield sous une vitesse de rotation de 100 tours par minute) inférieure à $200.10^{-3}$ Pa.s, le plus souvent ne dépassant pas $100.10^{-3}$ Pa.s à la température ambiante (20° C). La viscosité de la suspension est souvent d'au moins 0,5 et le plus souvent d'au moins $1.10^{-3}$ Pa.s, sans que ces valeurs ne soient critiques.

Par produits pesticides biosynthétiques, on entend désigner les produits pesticides biosynthétiques qui permettent de lutter contre les parasites animaux et végétaux de l'homme, des animaux et des végétaux (à l'exclusion des micro-organismes provoquant les maladies de l'homme et des animaux) et contre les agents vecteurs de maladies parasitaires et virales. Ces pesticides biosynthétiques, également appelés biopesticides peuvent avoir ainsi une action fongistatique ou fongicide, appelée également action anticryptogamique, une action herbicide ou encore une action contre les arthropodes et plus particulièrement contre les insectes. L'invention s'applique tout particulièrement aux pesticides biosynthétiques ayant une action insecticide ou anticryptogamique. De bons résultats ont été obtenus avec des pesticides biosynthétiques ayant une action insecticide.

Ces pesticides biosynthétiques peuvent provenir de divers types d'organismes pathogènes tels que les microorganismes (virus, fungi, protozoaires et bactéries) et les nématodes. Ils peuvent notamment provenir de microorganismes quelconques transformés par insertion d'ADN codant pour la fabrication de toxines et provenant de microorganismes pathogènes.

Les pesticides biosynthétiques peuvent se trouver dans les compositions concentrées selon l'invention sous des formes très diverses. Ainsi, ils peuvent se présenter sous la forme des organismes eux-mêmes à un stade quelconque de leur évolution, en ce comprises les formes végétatives éventuelles, tels quels, en association avec leur milieu de culture, sous forme totalement ou partiellement lysée, sous forme totalement ou partiellement sporulée, sous une forme ayant libéré partiellement ou totalement les spores par divers moyens tels que l'autolyse bactérienne, ou sous la forme des produits qui sont excrétés spontanément par les organismes tels que les exotoxines, sous la forme des produits que l'on peut extraire de ces organismes tels que les endotoxines par toute méthode connue en elle-même impliquant ou non une lyse de l'organisme en cause, sous la forme des produits éventuellement libérés par les organismes au cours de certaines étapes de leur évolution (cristaux associés ou non aux spores) ou encore sous plusieurs de ces formes simultanément.

Les compositions concentrées selon l'invention peuvent également contenir plusieurs pesticides biosynthétiques d'origines différentes.

Comme microorganismes bactériens convenant bien en général comme source de pesticides biosynthétiques, on peut signaler les eubactériales de la classe des sporulales et plus particulièrement celles de l'ordre des bacillales telles que les bacillanacées (par exemple le genre Bacillus) et celles de l'ordre des clostridiales telles que les clostridiacées (par exemple le genre Clostridium), les eubactériales de la classe des asporulales et plus particulièrement celles de l'ordre des bactériales telles que les pseudomonacées (par exemple le genre Pseudomonas) et les entérobactériacées (par exemple les genres Proteus, Enterobacter et Serratia) et les bactéries de l'ordre des Rickettsiales et plus particulièrement celles de la famille des Rickettsiacées telles que celles du genre Wolbachieae (espèces Enterella et Rickettsiella). Parmi ceux-ci, conviennent particulièrement bien les microorganismes bactériens du genre Bacillus tels que le Bacillus thuringiensis, le Bacillus sphaericus, le Bacillus popilliae, le Bacillus cereus, le Bacillus larvae, le Bacillus fribourgensis, et le Bacillus penetrans.

Comme microorganismes des types fungi convenant bien en général comme source de pesticides biosynthétiques, on peut signaler les zygomycètes de l'ordre des entomophtorales et plus particulièrement ceux de la famille des entomophtoracées (par exemple les genres Entomophtora et Conidiobolus), les phycomycètes de l'ordre des blastocladiales et plus particulièrement ceux de la famille des coelomomycétacées (par exemple le genre Coelomomyces), les ascomycètes de l'ordre des laboulbéniales, ceux de l'ordre des clavicipitales et plus particulièrement ceux de la famille des clavicipitacées (par exemple le genre Cordyceps) et ceux de l'ordre des eurotiales et plus particulièrement ceux de la famille des eurotiacées (par exemple le genre Aspergillus), les basidiomycètes de l'ordre des septobasidiales (par exemple le genre Septobasidium) et les champignons imparfaits ou deutéromycètes de types divers tels que ceux des genres Metarrhizium, Beauveria, Syngliocladium, Paecilomyces, Cephalosporium et Hirsutella. Parmi ceux-ci conviennent

particulièrement bien les microorganismes des types fungi des genres Entomophtora, Conidiobolus, Metarrhizium, Beauveria et Aspergillus.

Comme microorganismes du type virus convenant bien en général comme source de pesticides biosynthétiques, on peut signaler les virus à ADN bicaténaire et plus particulièrement les antomopoxvirus, les iridovirus, les baculovirus tels que les virus nucléopolyédrique (NPV) ainsi que les virus "granulosis" (GV), et les virus à ARN bicaténaire tels que les virus cytoplasmopolyédrique (CPV). Parmi ceux-ci les virus nucléopolyédriques des insectes conviennent particulièrement bien.

Comme protozoaires convenant bien en général, on peut signaler les sarcomastigophora tels que les amibes et flagellés, les sporozoaires tels que les coccidies, haemosporines et néogrigarinidies, et les cnidospores tels que les microsporides. Les microsporides conviennent particulièrement bien.

Comme nématodes, on peut signaler les rhabditidées telles que les néoaplectanidées, les mermithidées et les tylenchidées.

De bons résultats ont été obtenus avec les Bacillus thuringiensis de tous sérotypes et plus particulièrement ceux de sérotypes 1, 3, 7, 9, 10 et 14. Les meilleurs résultats ont été obtenus avec les Bacillus thuringiensis de sérotypes 1 (variété thuringiensis), 3 (variété Kurstaki), 7 (variété Aizawa) et 14 (variété israëlensis). Les divers types de Bacillus thuringiensis peuvent être mis en oeuvre dans les compositions selon l'invention sous forme des microorganismes eux-mêmes, tels quels ou lysés, de leurs spores, des cristaux associés ou non à leurs spores ou sous plusieurs de ces formes. Ces différentes formes peuvent éventuellement être associées à des résidus du milieu de culture. De bons résultats ont été obtenus en utilisant le mélange contenant des spores et les cristaux associés qui se forme spontanément lors de l'autolyse de la bactérie en fin de sporulation. Un tel mélange peut contenir, outre les spores et les cristaux associés ou non aux spores, des cellules ou des débris de cellules ainsi que des produits solides résiduaires du milieu nutritif mis en oeuvre lors de la culture.

Les particules solides de pesticides biosynthétiques sont en général mises en oeuvre pour préparer les compositions concentrées selon l'invention sous forme de poudres séchées. Dans le cas du Bacillus thuringiensis, le mélange solide contenant des spores et les cristaux associés contient en général, après séchage, moins de 15 % en poids d'eau et habituellement moins de 12 % d'eau. Le plus souvent il contient de 2 à 10 % d'eau.

Le liquide présent dans les compositions concentrées selon l'invention contient en général au moins un solvant. Ce dernier doit être inerte vis-à-vis des particules solides contenant des pesticides biosynthétiques et il ne doit notamment pas les désactiver, ni provoquer leur coagulation ni toute autre altération physique. Pour cela, on veille, en général, à ne pas utiliser de quantités significatives de composés organiques polyhydroxylés substitués par au moins deux groupes hydroxyles situés sur des atomes de carbone adjacents tels que l'éthylèneglycol ou le glycérol. Ainsi, la teneur en composés organiques polyhydroxylés de ce type ne dépasse pas 5 % et de préférence pas 2 % du poids total du liquide.

Les particules solides de pesticides biosynthétiques ont en général une masse spécifique moyenne réelle supérieure à 1, souvent supérieure à 1,05 et le plus souvent supérieure à 1,1. En général, leur masse spécifique ne dépasse pas 2 et le plus souvent 1,7. Dans le cas du Bacillus thuringiensis, le mélange solide sec contenant des spores et les cristaux associés a en général une masse spécifique voisine de 1,25 à 1,45.

Dès lors, le liquide présent dans les compositions concentrées selon l'invention contient au moins un solvant lourd de masse spécifique élevée, supérieure à 1, souvent supérieure à 1,05 et le plus souvent supérieure à 1,1. La masse spécifique du solvant lourd ne dépasse en général pas 2,5 sans que cette limite soit critique. Le plus souvent elle ne dépasse pas 2,2.

Pour ajuster la masse spécifique du liquide à celle des particules solides, on peut mettre en oeuvre un solvant unique ou un mélange de solvants. Lors de l'emploi de mélanges de solvants on peut mettre en oeuvre plusieurs solvants lourds de masses spécifiques différentes ou des solvants lourds en association avec des solvants légers de masse spécifique égale ou inférieure à 1 et en général de masse spécifique allant de 0,5 à 1. Quand on utilise des mélanges de solvants, on veille en général à ce qu'ils soient miscibles.

Lorsqu'on utilise un solvant unique, ce dernier est liquide à la température ambiante. Lorsqu'on utilise un mélange de solvants au moins l'un d'entre eux doit être liquide de manière à ce que le mélange soit liquide. Si l'un des co-solvants est solide, il doit donc être soluble dans le solvant liquide dans les proportions mises en oeuvre, de manière à ce que le mélange de solvants soit liquide.

Les solvants lourds présents dans les compositions concentrées selon l'invention sont en général choisis parmi les composés organiques halogénés et ceux substitués par des groupes nitro, les esters non acides d'acides nitrique, carbonique et phosphorique et le sulfure de carbone. Les solvants légers éventuels sont en général choisis parmi les hydrocarbures non substitués, les esters carboxyliques et les éthers.

Comme composés organiques halogénés convenant bien en général, on peut signaler les hydrocarbures halogénés aromatiques, aliphatiques et alicycliques contenant de 1 à 8 atomes de carbone dans leur molécule ainsi que les éthers halogénés et les esters halogénés contenant de 2 à 8 atomes de carbone dans leur

molécule substitués par au moins un halogène choisi de préférence parmi le chlore, le fluor et le brome.

Des hydrocarbures halogénés convenant particulièrement bien sont le tétrachlorure de carbone, le chloroforme, le chlorure de méthylène, les di-, les tri-, les tétra-, le penta- et l'hexachloréthanes, les trichlorotrifluoréthanes, le tri- et le tétrachloréthylène, les mono-, les di- et les trichloropropanes, les butanes, méthylpropanes, pentanes et hexanes mono- ou polychlorés, le mono- et les dichlorobenzènes, les chlorofluorobenzènes, les chlorobromobenzènes, les chloro-, fluoro- et bromotoluènes.

Des éthers et esters halogénés convenant particulièrement bien sont le 2,2'-dichloroéthyléther et les mono- et dichloroacétates de méthyle, d'éthyle, de propyle et d'isopropyle.

Comme hydrocarbures substitués par des groupes nitro convenant bien en général, on peut mentionner les hydrocarbures contenant de 1 à 8 atomes de carbone aromatiques, aliphatiques ou alicycliques, tels que le nitrobenzène, les nitrohalogénométhanes et les nitrohalogénobenzènes.

Comme esters d'acide carbonique convenant bien en général, on peut mentionner les esters contenant de 3 à 9 atomes de carbone dans la molécule tels que le carbonate d'éthylène diisopropyle. Des esters d'acide nitrique convenant bien en général sont ceux choisis parmi les esters aliphatiques contenant de 1 à 5 atomes de carbone dans la molécule tels que le nitrate de méthyle. Quant aux esters d'acide phosphorique convenant bien, ce sont ceux qui répondent à la formule

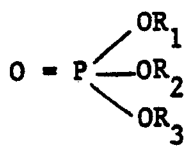

où $R_1$, $R_2$ et $R_3$ sont identiques ou différents et représentent des groupes alkyles, aryles, arylalkyles ou alkylaryles tels que la molécule contient de 3 à 12 atomes de carbone. A titre d'exemple de phosphate particulier, on peut signaler le phosphate de triméthyle.

Comme hydrocarbures non substitués convenant bien en général, on peut signaler les hydrocarbures contenant de 5 à 14 atomes de carbone aliphatiques, aromatiques, ou alicycliques, tels que le benzène, le toluène, le xylène, le pentane, l'hexane, l'heptane, l'octane, le diisobutyle, le cyclohexane, le méthylcyclohexane, la tétraline ainsi que des mélanges d'hydrocarbures tels que l'éther de pétrole, le gasoil ou d'autres produits de la distillation du pétrole.

Comme esters carboxyliques convenant bien en général, on peut signaler les esters aliphatiques, alicycliques ou aromatiques d'acides mono- ou polycarboxyliques avec des alcools mono- ou polyhydriques contenant de 2 à 20 et de préférence de 2 à 10 atomes de carbone dans la molécule. Parmi ceux-ci, conviennent particulièrement bien les formiates et acétates de méthyle, d'éthyle, d'isopropyle, de propyle, de butyle, d'isobutyle, de sec-butyle et de tert-butyle, les propionates, butyrates et isobutyrates de méthyle, d'éthyle, de propyle et d'isopropyle et les acétates de méthoxyéthyle, d'éthoxyéthyle et de cyclohexyle.

Comme éthers convenant bien en général, on peut signaler les éthers aliphatiques symétriques ou asymétriques contenant de 4 à 12 atomes de carbone tels que le diméthyléther, le diéthyléther, le butyléthyléther, le tert-butyléthyléther, le tert-amylméthyléther, le diisopropyléther, le dipropyléther, le dibutyléther, l'éthylhexyléther et le diisobutyléther.

Des solvants particulièrement adéquats sont les composés organiques halogénés et plus particulièrement les hydrocarbures halogénés éventuellement en mélange entre eux ou avec des hydrocarbures non substitués. On peut avantageusement utiliser des hydrocarbures chlorés comme hydrocarbures halogénés.

De bons résultats ont été obtenus avec les hydrocarbures chlorés de la série de l'éthane et de l'éthylène éventuellement en mélange entre eux ou avec des produits de la distillation du pétrole. Dans le cas du Bacillus thuringiensis, les meilleurs résultats ont été obtenus avec le perchloréthylène, le 1,1,2-trichloréthane, les tétrachloréthanes et le pentachloréthane, éventuellement en mélange entre eux ou avec du gasoil.

Le liquide présent dans les compositions concentrées selon l'invention contient en général au moins 40 % en poids de solvants et souvent au moins 60 % en poids de solvants. Il peut contenir jusqu'à 100 % de solvant, souvent jusqu'à 99 % de solvant et de préférence jusqu'à 95 % en poids de solvant.

Le liquide présent dans les compositions concentrées selon l'invention peut contenir en outre un ou plusieurs agents tensioactifs. Ceux-ci sont en général choisis parmi les agents tensioactifs anioniques, les agents tensioactifs non-ioniques et leurs mélanges.

Les agents tensioactifs anioniques sont en général choisis parmi les arylsulfonates, les alkylsulfonates, les alkylarylsulfonates, les sulfates et sulfonates d'oléfines, les sulfates d'alcool gras, les monoglycérides sulfatés, les éthers gras sulfatés, les sulfosuccinates, les sels d'acides gras et les mono- et di-esters d'acide phosphorique avec les alcools gras. Ils peuvent se présenter sous la forme de leurs sels alcalins et plus particulièrement de leurs sels de métaux alcalins, tels que le sodium ou le potassium, de leurs sels de métaux alcalino-terreux, tels que le magnésium et le calcium, de leurs sels d'ammonium ou de leurs sels d'alkanolamines

telles que la triéthanolamine. Les sels d'alkanolamines et plus particulièrement de triéthanolamine ainsi que les sels de calcium conviennent bien. De bons résultats ont été obtenus avec les sulfonates d'alkyle, d'aryle, d'alkylaryle et d'oléfine et plus particulièrement avec les sulfonates d'alkylaryle. De bons résultats ont été obtenus avec les agents tensioactifs anioniques contenant de 10 à 24 et de préférence de 12 à 20 atomes de carbone dans leur molécule.

Par composés organiques "gras", tels qu'alcools gras, acides gras, etc on entend désigner les composés contenant au moins 8 et de préférence au moins 10 atomes de carbone et en général pas plus de 30 et de préférence pas plus de 24 atomes de carbone dans leur molécule.

Les agents tensioactifs non ioniques sont en général choisis parmi les condensats d'oxyde d'éthylène et/ou d'oxyde de propylène, tels que les condensats d'oxyde d'éthylène et/ou d'oxyde de propylène avec des alcools ou des alcools gras, des alkylphénols, des acides carboxyliques ou des acides gras, des amines ou des amines grasses, des amides ou des amides d'acides gras, des alkanolamides et des esters gras, les oxydes d'amines grasses, les amines grasses, les amides d'acides gras, les alkanolamides d'acides gras, les alcools gras, les alkylphénols, les esters d'acides gras et d'alcools mono-ou poly-hydroxylés tels que les esters d'alcool isopropylique, de glycols, de glycérol et de sorbitan, les éthers gras de composés mono- ou poly-hydroxylés, les dérivés de la lanoline, les triesters d'acide phosphorique et d'alcool gras et les esters alkylés de sulfosuccinates. Les condensats d'oxyde d'éthylène et/ou de propylène avec les autres composés donnés ci-avant peuvent contenir de 2 à 25 et de préférence de 2 à 20 unités d'oxyde d'alkylène. On peut ainsi utiliser de manière avantageuse des condensats d'oxyde d'éthylène et/ou de propylène avec des alcools gras, des alkylphénols, des acides gras, des amines, des amides et des alkanolamides. Le plus souvent on utilise des condensats d'oxyde d'éthylène et/ou de propylène avec des alcools gras et des acides gras. En général les agents tensioactifs anioniques utilisés dans les compositions concentrées selon l'invention sont choisis parmi ceux dont la balance hydrophile-lipophile (HLB) telle que définie par P. Blonchard (Parf. Cosm. sav., 1969, 12 (2), février, p. 82 à 91) est comprise entre 6 et 16.

En général on utilise des agents tensioactifs compatibles tant avec l'eau qu'avec les différents produits de la distillation du pétrole de manière à ce que la composition concentrée selon l'invention puisse être aisément diluée, dispersée ou émulsionnée si nécessaire.

On peut mettre en oeuvre un agent tensioactif unique. En général on utilise des mélanges d'agents tensioactifs et plus particulièrement des mélanges contenant au moins un agent tensioactif non ionique. Ces derniers peuvent être utilisés en mélange avec au moins un autre agent tensioactif non ionique ou avec au moins un agent tensioactif anionique. En général, on utilise un mélange contenant au moins un agent tensioactif hydrophile et au moins un agent tensioactif hydrophobe.

Lorsqu'on utilise un mélange d'agents tensioactifs non ioniques celui-ci contiendra de préférence au moins un agent tensioactif d'indice HLB inférieur à 10 et le plus souvent compris entre 6 et 10 et de préférence entre 8 et 10 et au moins un agent tensioactif d'indice HLB égal ou supérieur à 10 et le plus souvent de 10 à 15.

Lorsqu'on utilise un mélange d'agents tensioactifs anioniques et non ioniques, celui-ci contiendra de préférence au moins un agent tensioactif non ionique d'indice HLB inférieur à 10 éventuellement en association avec un agent tensioactif non ionique d'indice HLB supérieur ou égal à 10.

Dans ces mélanges le rapport pondéral agents tensioactifs anioniques sur agents tensioactifs non ioniques est en général compris entre 0,001 et 10 et le plus souvent entre 0,01 et 2. Les meilleurs résultats sont obtenus lorsque ce rapport est compris entre 0,02 et 1.

La quantité d'agents tensioactifs présente dans les compositions concentrées selon l'invention peut aller jusqu'à 60 % en poids de la quantité de liquide et le plus souvent jusqu'à 40 % en poids. Cette quantité est en général d'au moins 1 % et de préférence d'au moins 5 % en poids de la quantité de liquide.

Les agents tensioactifs, lorsqu'ils sont présents dans les compositions concentrées selon l'invention, influencent la masse spécifique du liquide. Leur masse spécifique étant en général peu élevée (elle n'est que rarement supérieure à 1), le solvant ou le mélange de solvants mis en oeuvre a une masse spécifique supérieure à celle des particules solides de pesticides biosynthétiques.

Les compositions concentrées selon l'invention peuvent contenir en outre divers autres additifs. Parmi ceux-ci, on peut signaler des adhésifs ou des collants de manière à accroître l'adhérence de la composition sur les surfaces des plantes et des additifs pour ajuster la masse spécifique du liquide à celle du solide. On peut également y ajouter des parfums ou des masques d'odeurs et divers préservatifs tels que des antioxydants, des agents antibactériens (bactéricides ou bactériostatiques, et des agents susceptibles d'absorber les rayonnements ultra-violets (qui pourraient éventuellement causer la désactivation du pesticide biosynthétique). On peut enfin y ajouter des pesticides organiques de synthèse (pesticides chimiques).

Ces divers additifs peuvent, selon leur solubilité dans le liquide, se retrouver dans la phase solide ou dans la phase liquide. En général, pour des raisons d'homogénéité on préfère utiliser des additifs solubles dans le liquide. Ces additifs sont en général mis en oeuvre en quantités ne dépassant pas 15 % du poids du liquide.

Le plus souvent ils sont mis en oeuvre en quantités de 0,1 à 10 % du poids du liquide.

Les compositions concentrées selon l'invention peuvent également contenir des résidus de la fabrication du pesticide biosynthétique. Le plus souvent ces derniers sont incorporés dans les particules solides.

Les compositions concentrées selon l'invention peuvent contenir de petites quantités d'eau.

En général la quantité d'eau présente dans les compositions concentrées selon l'invention est faible. Elle est le plus souvent inférieure à 10 % et de préférence inférieure à 7 %. L'eau présente est le plus souvent constituée essentiellement par l'eau fixée dans les particules solides des pesticides biosynthétiques qui n'a pas été éliminée par séchage. Il ne s'agit donc, en général, pas d'eau libre. En général, on n'ajoute pas de quantité significative d'eau à la composition concentrée selon l'invention. Ainsi, la quantité d'eau ajoutée volontairement à la composition concentrée est le plus souvent inférieure à 2 %.

Les compositions concentrées selon l'invention contiennent en général de 50 à 600 g par litre de particules solides de pesticides biosynthétiques et de 400 à 1600 g par litre de liquide. Le liquide peut contenir de 65 à 90 % en poids de solvant, de 10 à 35 % en poids d'agents tensioactifs dont au moins un agent tensioactif non ionique et de 0 à 5 % en poids d'autres additifs.

La présente invention concerne également des procédés pour la fabrication des compositions concentrées selon l'invention.

Un procédé consiste à prélever le milieu de culture des microorganismes générateurs des produits pesticides biosynthétiques, à en séparer de l'eau par des techniques habituelles de séparation d'eau telles que la centrifugation, l'ultrafiltration, la précipitation par addition d'un non-solvant tel que l'acétone ou la floculation, à sécher la pâte ainsi obtenue par des techniques de séchage habituelles telles que le séchage par atomisation, le séchage par lyophilisation ou le séchage en tambour de manière à obtenir des particules solides contenant en général moins de 15 % et de préférence moins de 12 % d'eau et à mélanger la poudre sèche avec le liquide.

L'ordre d'introduction des différents constituants de la composition concentrée à l'étape de mélange n'est en général pas critique de sorte qu'on peut introduire les constituants du liquide distinctement ou sous forme d'une solution préparée à l'avance.

Dans le cas du Bacillus thuringiensis le milieu de culture est prélevé par exemple à la fin de la phase de sporulation.

Un autre procédé consiste à séparer du milieu de culture des microorganismes générateurs de produits pesticides biosynthétiques, à la fin de la phase de sporulation, des fractions riches en cristaux ou en spores ou en ces deux produits simultanément. Ces fractions sont ensuite séchées et traitées selon les mêmes techniques que celles décrites ci-avant.

La présente invention concerne également un procédé pour l'utilisation des compositions concentrées.

Les compositions concentrées selon l'invention peuvent être utilisées comme pesticides et plus particulièrement comme agents contre les insectes et les arachnides à un stade quelconque de leur développement, ou comme agents anticryptogamiques. Pour ce faire, elles sont pulvérisées sur les surfaces infestées par des arthropodes, des insectes ou des fungi selon toutes méthodes connues en elles-mêmes telles que la pulvérisation manuelle, la pulvérisation mécanique et plus particulièrement la pulvérisation par voie aérienne. Elles peuvent notamment être pulvérisées sur les surfaces infestées par des arachnides et des insectes et plus particulièrement par des lépidoptères, des diptères, des hyménoptères, des coléoptères, des aphaniptères, des orthoptères, des isoptères et des homoptères.

Les doses à mettre en oeuvre sont fonction du pesticide biosynthétique utilisé et de l'agent pathogène à éliminer.

Dans le cas du Bacillus thuringiensis et plus particulièrement des sérotypes 1, 3, 7 et 14, on pulvérise en général de 50 à 5000 g de particules solides à l'hectare. Les compositions concentrées selon l'invention peuvent être pulvérisées telles quelles. Elles peuvent être également dispersées, diluées ou émulsionnées dans un diluant comme l'eau ou un diluant organique tel qu'un produit de la distillation du pétrole (par exemple le gasoil). Dans ce cas, on les dilue par 1 à 50 fois et de préférence 4 à 30 fois leur volume de diluant.

Afin d'illustrer l'invention, on donne ci-après un exemple de composition concentrée.

**Exemple**

Le mélange obtenu lors de la fermentation du Bacillus thuringiensis sérotype 3 est, après sporulation, centrifugé jusqu'à obtenir une pâte contenant environ 10 à 12 % de matières sèches. La pâte est séchée par atomisation de manière à avoir une poudre primaire contenant environ 5 à 6 % d'eau.

La poudre primaire présente une activité de 80 000 unités internationales mesurée à l'aide d'Anagasta kuhniella Z. selon la méthode de titrage biologique de L. Charmoille et coll. (Phytiatrie-Phytopharmacie, 1974, 23, p. 223 - 234).

On pré lève 500 g de cette poudre que l'on mélange avec un mélange liquide ayant la composition suivante:

| | |
|---|---|
| Tétrachloréthylène | 670 g |
| tensioactif TENSOLASE DLA 20 | 100 g |
| tensioactif TENSOVAX DO 14 | 77 g |
| dodécylbenzènesulfonate de calcium | 23 g |
| préservatifs | 5 g |

Le tensioactif TENSOLASE DLA 20 est un

alcool gras en $C_{12}$-$C_{14}$ éthoxylé à 6 - 8 molécules d'oxyde d'éthylène ayant un indice HLB égal à environ 12. Le tensioactif TENSOVAX DO 14 est un acide oléique éthoxylé à 4 - 5 molécules d'oxyde d'éthylène ayant un indice HLB égal à environ 8 - 9.

On obtient une suspension fluide ininflammable ayant une viscosité de 84 - 80 $10^{-3}$ Pa.s (mesurée avec un viscosimètre Brookfield équipé d'un Spindle n° 4 sous une vitesse de rotation respectivement de 100 - 50 tours par minute) qui ne décante pas après 11 mois de stockage.

L'activité de la suspension après 11 mois n'a pas changé de manière significative.

La masse spécifique de la poudre primaire est de 1,39 et celle du liquide de 1,40.

## Revendications

1. Compositions concentrées contenant des produits pesticides biosynthétiques provenant de microorganismes des types Bacillus, sous forme de particules solides en suspension dans un liquide dont la masse spécifique est voisine de ou légèrement supérieure à la masse spécifique des particules solides caractérisées en ce qu'elles contiennent de 50 à 600 g par litre de particules solides et de 400 à 1600 g par litre de liquide et qu'elles ont une viscosité de 0,5 à $200.10^{-3}$ Pa.s.

2. Compositions selon la revendication 1 caractérisées en ce qu'elles contiennent des produits pesticides biosynthétiques provenant de Bacillus thuringiensis.

3. Compositions selon la revendication 1 ou 2 caractérisées en ce que le liquide contient un solvant organique choisi parmi les hydrocarbures halogénés, leurs mélanges entre eux et leurs mélanges avec des hydrocarbures non substitués.

4. Compositions selon l'une quelconque des revendications 1 à 3 caractérisées en ce que le liquide contient en outre au moins un agent tensioactif choisi parmi les agents tensioactifs non ioniques, anioniques et leurs mélanges.

5. Compositions selon l'une quelconque des revendications 1 à 4 caractérisées en ce que le liquide contient de 65 à 90 % en poids de solvant, de 10 à 35 % en poids d'agents tensioactifs dont au moins un agent tensioactif non ionique et de 0 à 5 % en poids d'autres additifs.

6. Procédé pour la fabrication de compositions selon l'une quelconque des revendications 1 à 5 caractérisé en ce qu'on prélève le milieu de culture des microorganismes pathogènes, on en sépare l'eau, on sèche la pâte ainsi obtenue de manière à obtenir des particules solides contenant moins de 12 % d'eau et on mélange la poudre sèche avec le liquide de masse spécifique voisine ou légèrement supérieure à celle des particules solides.

7. Procédé pour éliminer les insectes, les arachnides ou les fungi caractérisé en ce qu'on pulvérise sur les surfaces infestées les compositions selon l'une quelconque des revendications 1 à 6.

## Patentansprüche

1. Konzentrierte Zusammensetzungen enthaltend biosynthetische pestizide Produkte, die von Mikroorgansimen der Art Bacillus stammen, als feste Partikel in Suspension in einer Flüssigkeit, deren spezifische Masse benachbart oder leicht oberhalb der spezifischen Masse der festen Partikel ist, dadurch gekennzeichnet, daß sie von 50 bis 600 g pro Liter feste Partikel und von 400 bis 1600 g pro Liter Flüssigkeit enthalten und, daß sie eine Viskosität von 0,5 bis $200.10^{-3}$ Pa.s haben.

2. Zusammensetzungen nach Anspruch 1, dadurch gekennzeichnet, daß sie biosynthetische pestizide Produkte enthalten, die von Bacillus thuringiensis stammen.

3. Zusammensetzungen nach Anspruch 1 oder 2, dadurch gekennzeichnet, daß die Flüssigkeit ein organisches Lösungsmittel enthält, ausgewählt unter halogenierten Kohlenwasserstoffen, deren Mischungen untereinander und deren Mischungen mit nichtsubstituierten Kohlenwasserstoffen.

4. Zusammensetzungen nach einem der Ansprüche 1 bis 3, dadurch gekennzeichnet, daß die Flüssigkeit außerdem mindestens ein grenzflächenaktives Mittel enthält, das unter den nicht-ionischen, anionischen grenzflächenaktiven Mitteln und deren Mischungen ausgewählt ist.

5. Zusammensetzungen nach einem der Ansprüche 1 bis 4, dadurch gekennzeichnet, daß die Flüssigkeit von 65 bis 90 Gew.-% Lösungsmittel, von 10 bis 35 Gew.-% grenzflächenaktive Mittel, darunter mindestens ein nichtionisches grenzflächenaktives Mittel und 0 bis 5 Gew.-% andere Additive enthält.

6. Verfahren zur Herstellung von Zusammensetzungen nach einem der Ansprüche 1 bis 5, dadurch gekennzeichnet, daß man das Medium der pathogenen Mikroorganismenkultur entnimmt, das Wasser davon abtrennt, die so erhaltene Paste trocknet, um feste Partikel zu erhalten, die weniger als 12 % Wasser enthalten, und das trockene Pulver mit der Flüssigkeit einer spezifischen Masse, die benachbart oder leicht über derjenigen der festen Partikel ist, mischt.

7. Verfahren zum Beseitigen von Insekten, Arachniden oder Pilzen, dadurch gekennzeichnet, daß man die Zusammensetzungen nach einem der Ansprüche 1 bis 6 auf die befallenen Flächen versprüht.

## Claims

1. Concentrated compositions containing biosynthetic pesticidal products originating from

microorganisms of the Bacillus types, in the form of solid particles in suspension in a liquid whose density is similar to or slightly higher than the density of the solid particles, characterized in that they contain from 50 to 600 g of solid particles per litre and from 400 to 1600 g of liquid per litre and that they have a viscosity of 0.5 to 200 x $10^{-3}$ Pa s.

2. Compositions according to Claim 1, characterized in that they contain biosynthetic pesticidal products originating from Bacillus thuringiensis.

3. Compositions according to Claim 1 or 2, characterized in that the liquid contains an organic solvent chosen from amongst halogen-substituted hydrocarbons, mixtures thereof with one another and mixtures thereof with unsubstituted hydrocarbons.

4. Compositions according to any one of Claims 1 to 3, characterized in that the liquid also contains at least one surface-active agent chosen from amongst nonionic surface-active agents, anionic surface-active agents and mixtures thereof.

5. Compositions according to any one of Claims 1 to 4, characterized in that the liquid contains from 65 to 90 % by weight of solvent, from 10 to 35 % by weight of surface-active agents, including at least one nonionic surface-active agent, and from 0 to 5 % by weight of other additives.

6. Process for the manufacture of compositions according to any one of claims 1 to 5, characterized in that the culture medium of the pathogenic microorganisms is taken, the water is separated therefrom, the resulting paste is dried so as to give solid particles containing less than 12 % of water, and the dry powder is mixed with the liquid whose density is similar to or slightly higher than that of the solid particles.

7. Process for eliminating insects, Arachnida or fungi, characterized in that the compositions according to any one of Claims 1 to 6 are sprayed onto the infested sufaces.